# EUROPEAN PATENT SPECIFICATION

(11) **EP 4 375 189 B1**
(45) Date of publication and mention of the grant of the patent: **24.12.2025**
(21) Application number: 22210012.5
(22) Date of filing: 28.11.2022
(51) Int. Cl.: B64D 11/04

(54) **LIQUID LEVEL SENSING SYSTEM & FLIGHT PHASE DETECTION SYSTEM FOR AIRCRAFT GALLEY INSERTS**
FLÜSSIGKEITSSTANDMESSSYSTEM UND FLUGPHASENDETEKTIONSSYSTEM FÜR FLUGZEUGBORDKÜCHENEINSÄTZE
SYSTÈME DE DÉTECTION DE NIVEAU DE LIQUIDE ET SYSTÈME DE DÉTECTION DE PHASE DE VOL POUR INSERTS DE CUISINE D'AÉRONEF

(43) Date of publication of application: 29.05.2024
(73) Proprietor: B/E Aerospace, Inc., Winston Salem, NC 27105 (US)
(72) Inventor: PANJER, Frederik Adrian Stephan, Elzenkade 1, Houten 3992 AD (NL)
(74) Representative: Dehns

(56) References cited:
- WO-A1-2021/086395
- US-A1- 2017 042 373
- US-B2- 9 863 695

## Description

### TECHNICAL FIELD

This disclosure relates to a liquid level sensing system for galley insert appliances in aircraft galley inserts.

This disclosure also relates to flight phase detection systems for galley insert appliances in aircraft galley inserts.

### BACKGROUND

It is known to monitor the liquid level in aircraft galley insert appliances, for example to ensure that a coffee jug is not too full, for user safety. However, in appliances such as coffee makers it can be challenging to measure the brew level when the aircraft is not flying level.

US 2017/0042373 A1 discloses an actively heated or cooled food container. The food container has a temperature control system including one or more heating or cooling elements. The container can have one or more liquid level sensors for detecting a liquid level In the container.

US 9,863,695 B2 discloses a container with active temperature control, including control circuitry arranged to control one or more heating elements to maintain the temperature of a liquid in a chamber. The container has a sensor which can sense a liquid level in the chamber.

### SUMMARY

When viewed from a first aspect, the present disclosure provides a liquid level sensing system according to claim 1.

This liquid level sensing system can improve the accuracy of liquid level evaluation for a galley insert appliance by compensating for the variation in the reflected signal path due to changes in aircraft angle. The liquid level sensor will pitch, yaw and roll with the aircraft but the liquid surface remains perpendicular to the direction of gravity.

It is possible that the aircraft angle compensation controller alters the angle and/or position of the liquid level sensor via a software adjustment. For example, a processor in the liquid level sensor that evaluates the liquid level may be programmed to adjust its evaluation based on the input from the gyroscopic sensor. In other examples, the aircraft angle compensation controller alters the angle and/or position of the liquid level sensor via a hardware adjustment. In one example, the system further comprises at least one actuator which is arranged to alter the angle and/or position of the liquid level sensor under control of the aircraft angle compensation controller. The at least one actuator can stabilize the liquid level sensor so that it remains substantially parallel to the liquid surface despite changes in aircraft angle.

It is possible to only account for variation of aircraft angle in one axis, for example to accommodate for the pitch of the aircraft only. In one example, the at least one actuator controls the angle of the liquid level sensor about a first axis and a second axis. This can enable the liquid level sensing system to account for aircraft angle variation in more than one axis, such as at least two of the pitch, yaw and roll of the aircraft.

Any two axes of rotation of the liquid level sensor could be chosen. In one example:
the first axis is perpendicular to the liquid surface when the angle of the liquid is aligned with the galley insert appliance, i.e. when no aircraft angle compensation is required;
the second axis is parallel to the liquid surface when the angle of the liquid is aligned with the galley insert appliance.

In another example:
the first axis is parallel to the liquid surface when the angle of the liquid is aligned with the galley insert appliance;
the second axis is also parallel to the liquid surface when the angle of the liquid is aligned with the galley insert appliance; and
the second axis is perpendicular to the first axis.

It is possible for the liquid level sensor to comprise a singular sensor. In various examples, the liquid level sensor comprises a plurality of sensors. In various examples, the plurality of sensors are arranged to all be angled towards the liquid surface at the same angle, optionally perpendicular to the liquid surface. In other examples, the plurality of sensors are arranged to be angled towards the liquid surface at various angles. This can enable a more accurate evaluation of the liquid level, using readings from various of the sensors.

In some examples, the liquid level sensor comprises a non-contact sensor, preferably an electromagnetic or acoustic sensor. In some examples, the liquid level sensor comprises an optical (e.g. infra-red) sensor, or an ultrasonic sensor.

In some examples, the liquid level sensor comprises a contact sensor, preferably a fibre-optic column arranged to be partially submerged in the liquid in a galley insert appliance.

In some examples, the liquid level sensing system further comprises means for evaluation of the liquid level and (e.g. direct or indirect) control of a liquid flow rate in the galley insert appliance depending on the liquid level. For example, the liquid level sensing system can be arranged to turn off the liquid flow if the liquid level is too high in order to prevent the liquid overflowing.

In some examples, the liquid level sensor is operably connected to the aircraft angle compensation controller. In one example, the aircraft angle compensation controller (e.g. directly or indirectly) controls the liquid flow rate in the galley insert appliance depending on the liquid level. In these examples, only one controller is required to adjust both the angle/position of the liquid level sensor and also the liquid flow rate, a separate controller is not required for each function.

In one example where the aircraft angle compensation controller indirectly controls the liquid flow rate in the galley insert appliance, the aircraft angle compensation controller is operably connected to an appliance controller such that the appliance controller controls the liquid flow rate in the galley insert appliance depending on the liquid level.

In various examples, the means for evaluation of the liquid level is one of the liquid level sensor, the aircraft compensation controller or the appliance controller.

In various examples, the aircraft angle compensation controller is also the appliance controller. This provides the benefit that the aircraft angle compensation controller and the appliance controller are one integrated system and not distinct controllers that need to interface with each other to perform various tasks.

In various examples, the liquid level sensing system is arranged to stop flow of the liquid in the galley insert appliance once the liquid level has reached a predetermined threshold.

In various examples, the gyroscopic sensor may be part of the aircraft control system, or located anywhere within the aircraft or aircraft galley. In one example, the liquid level sensing system further comprises the gyroscopic sensor. This can be a benefit as the aircraft control system, i.e. the primary control system for controlling the aircraft, is a safety critical system and it can be beneficial to keep this system isolated from other systems, such as the liquid level sensing system in the aircraft galley.

In some examples, the aircraft angle compensation controller is further arranged to evaluate the input from the gyroscopic sensor to detect the flight phase of the aircraft. For example, the controller might detect that the aircraft is in take-off phase, climb phase, cruise phase, descent phase, approach phase, or taxi phase. The aircraft compensation controller may use knowledge of the flight phase to selectively alter the angle and/or position of the liquid level sensor, for example only making an adjustment to the liquid level sensor during a certain flight phase or not during a certain flight phase.

In one example, the aircraft compensation controller is further arranged to adjust operation of the galley insert appliance (e.g. directly or indirectly) depending on the detected flight phase of the aircraft. For example, the aircraft angle compensation controller might be arranged to stop flow of the liquid in the galley insert appliance during the descent phase.

In various examples, the liquid level sensing system may further comprise at least one additional liquid level sensor according to any of the previous examples for the same liquid, another liquid within the same galley insert appliance and/or another liquid in another galley insert appliance in either the same aircraft galley insert or another aircraft galley insert.

In various examples, the liquid level sensing system may be a standalone system that can be installed in at least one galley insert appliance. In one example, an aircraft galley insert appliance system comprises the liquid level sensing system and at least one galley insert appliance in an aircraft galley insert. These examples provide the benefit that the aircraft galley insert appliance system is an integrated system comprising the liquid level sensing system and the galley insert appliance, which reduces the complexity of the system, and can reduce the extent to which various controllers are required to interface with each other.

In various examples, the aircraft galley insert appliance system further comprises at least one appliance controller for the at least one galley insert appliance. In some examples, each galley insert appliance has a separate controller. In some examples, one appliance controller controls at least two of the galley insert appliances. In various examples, the aircraft compensation controller is operably connected to each of the at least one appliance controllers. In other examples, the aircraft compensation controller is also the appliance controller for at least one of the galley insert appliances. In these examples, the controller for aircraft angle compensation of the liquid level sensor is integrated within the same system as the appliance controller, which can greatly reduce the complexity of the system as a whole.

In some examples, any of the respective at least one appliance controllers for the at least one galley insert appliance is operably connected to the respective liquid level sensor. The appliance controller evaluates the liquid level and controls the liquid flow rate in the galley insert appliance depending on the liquid level. This can allow for direct control of the liquid flow rate by the appliance controller based on the signal from the liquid level sensor, instead of indirect control of the liquid flow rate via the aircraft compensation controller.

In one example, the aircraft galley insert appliance system comprises the gyroscopic sensor for the liquid level sensing system, which may be in addition to or instead of the aircraft compensation controller comprising a gyroscopic sensor. In some examples, at least one galley insert appliance comprises the gyroscopic sensor. This can be a benefit even if other gyroscopic sensors are present in the aircraft, for example in the aircraft control system, i.e. the primary control system for controlling the aircraft, as this is a safety critical system and it can be beneficial to keep this system isolated from other systems, such as the aircraft galley. Multiple gyroscopic sensors, such as when the aircraft compensation controller comprises a gyroscopic sensor and the galley insert appliance also comprises a gyroscopic sensor, can be beneficial as multiple readings can help the aircraft compensation controller to make more accurate adjustments to the liquid level sensor.

In various examples, any of the at least one galley insert appliance may be a catering appliance such as a hot beverage maker, a steam oven, a trolley for storage and/or transport of hot beverage jugs, or a water heater.

### BRIEF DESCRIPTION OF DRAWINGS

One or more non-limiting examples will now be described. By way of example only, and with reference to the accompanying figures in which:
Figure 1a shows an aircraft galley insert comprising a galley insert appliance and a liquid level sensor.
Figure 1b shows the aircraft galley insert of Fig. 1a under the effect of variation of the aircraft angle.
Figure 2a shows an aircraft galley insert comprising a galley insert appliance, under the effect of variation of the aircraft angle, and one example of the liquid level sensing system comprising a non-contact liquid level sensor. Wherein the galley insert appliance comprises a gyroscopic sensor for the liquid level sensing system.
Figure 2b shows one example of rotation of the liquid level sensor in the liquid level sensing system of Fig. 2a to compensate for aircraft angle variation.
Figure 2c shows a second example of rotation of the liquid level sensor in the liquid level sensing system of Fig. 2a to compensate for aircraft angle variation.
Figure 3 shows an aircraft galley insert comprising a galley insert appliance, under the effect of variation of the aircraft angle; and a second example of the liquid level sensing system comprising a contact liquid level sensor. Wherein the galley insert appliance comprises a gyroscopic sensor for the liquid level sensing system.
Figure 4 shows one example of the aircraft galley insert appliance system comprising a third example of the liquid level sensing system and several aircraft galley inserts; wherein the liquid level sensing system is operably connected to each aircraft galley insert; and each aircraft galley insert comprises a galley insert appliance and an appliance controller for the respective galley insert appliance; and the first aircraft galley insert further comprises a gyroscopic sensor for the liquid level sensing system.
Figure 5 shows one example of the flight phase detection system, which is provided for reference only. The flight phase detection system comprises a flight phase detection controller and a gyroscopic sensor; wherein the flight phase detection system is operably connected to several aircraft galley inserts; and each galley insert comprises a galley insert appliance and an appliance controller for the respective galley insert appliance.

### DETAILED DESCRIPTION

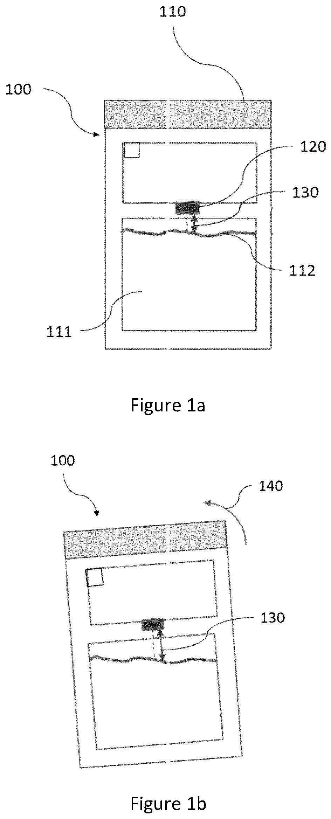

Referring to Fig. 1a, an aircraft galley insert (100) comprises a galley insert appliance (110) and a liquid level sensor (120). Wherein, the galley insert appliance (110) contains a liquid (111) and the liquid level is evaluated by the liquid level sensor (120) by evaluating the distance (130) between the liquid level sensor (120) and the liquid surface (112).

Referring to Fig. 1b, variation of the aircraft angle (140) causes variation of the distance (130) between the liquid surface (112) and the liquid level sensor (120).

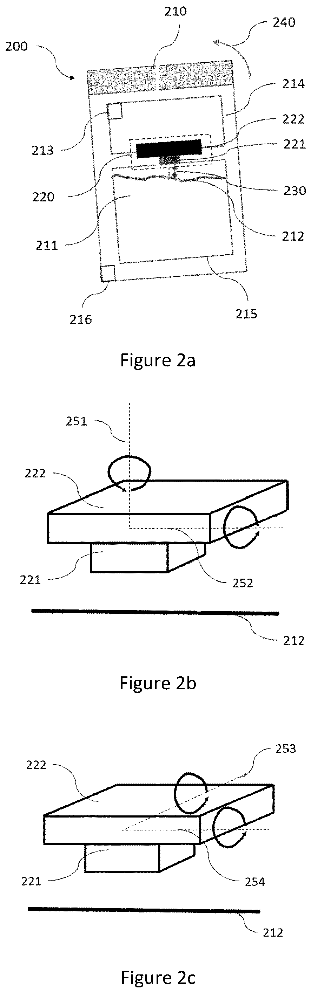

Referring to Fig. 2a, a liquid level sensing system (220) comprises a liquid level sensor (221), an actuator (222) for the liquid level sensor (221) and an aircraft angle compensation controller (not shown). Wherein, the liquid level sensor (221) is arranged to emit a signal towards the surface (212) of a liquid (211) in a galley insert appliance (210) and to detect the reflection of the signal from the surface (212) for evaluation of the liquid level; by evaluating the distance (230) between the liquid level sensor (221) and the liquid surface (212). In this example, the actuator (222) is arranged to alter the angle of the liquid level sensor (221) under control of the aircraft angle compensation controller, depending on an input to the aircraft angle compensation controller from a gyroscopic sensor (216). As a result of the actuator (222) varying the angle of the liquid level sensor (221), variation of the distance (230) to the liquid surface (212) by the variation of the aircraft angle (240) is minimised, ensuring a more accurate evaluation of the liquid level.

Referring to Fig. 2b, in one example the actuator (222) adjusts the angle of the liquid level sensor (221) by rotation about both of the two perpendicular axes (251, 252) or at least by rotation about the horizontal axis (252). When no compensation for the aircraft angle is required, the first axis of rotation (251) of the liquid level sensor (221) is perpendicular to the liquid surface (212), i.e. a vertical axis, and the second axis of rotation (252) is parallel to the liquid surface (212), i.e. a horizontal axis.

Referring to Fig. 2c, in another example the actuator (222) adjusts the angle of the liquid level sensor (221) by rotation about one or two horizontal axes (253, 254). When no compensation for the aircraft angle is required, both axes of rotation (253, 254) are parallel to the liquid surface (212), i.e. horizontal axes. In this example the second axis of rotation (254) is perpendicular to the first axis of rotation (253).

The liquid level sensor (221) in the example in Fig. 2a is an infra-red sensor which emits an infra-red signal towards the liquid surface (212) and detects the reflection of the infra-red signal from the surface to evaluate the liquid level; by evaluating the distance (230) between the liquid level sensor (221) and the liquid surface (212).

While the example of an infra-red sensor is given, the liquid level sensor (221) in Fig. 2a could be any non-contact sensor that emits a signal and detects the reflection of the signal from the liquid surface (212), for example the liquid level sensor in Fig. 2a could be an ultrasonic sensor or an optical sensor.

While in this example, the liquid level sensor (221) is arranged to be at an angle perpendicular to the liquid surface (212), one skilled in the art will understand that the liquid level sensor (221) could be arranged to be angled at any angle towards the liquid surface.

While in this example, the liquid level sensor (221) consists of a singular sensor, in various examples the liquid level sensor (221) could further comprise at least one additional sensor. Each sensor could be arranged to be angled at the same angle towards the liquid surface (212), or at various angles towards the liquid surface (212). One skilled in the art will also appreciate that these various sensors could all be sensors of the same type, or could be of a variety of different sensor types. One skilled in the art will also appreciate that a combination of contact sensors and non-contact sensors is also possible.

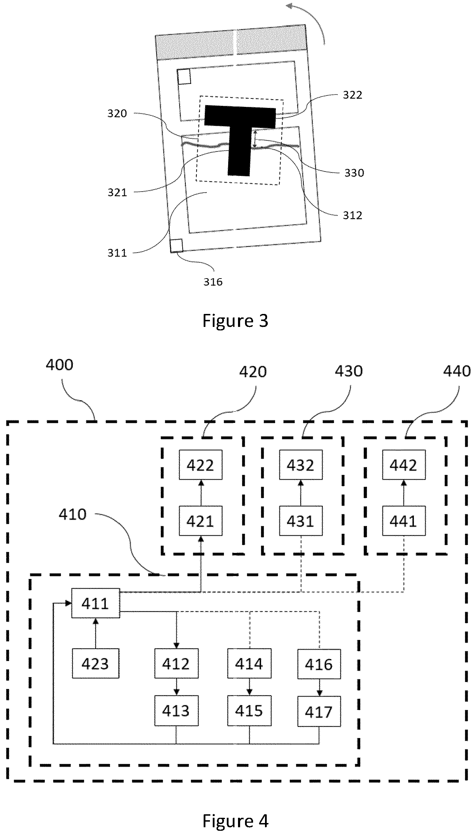

Referring to Fig. 3, a similar example to the example in Fig. 2a is shown. In this example, the liquid level sensing system (320) comprises a contact sensor as a liquid level sensor (321) instead of the non-contact sensor of Fig. 2a (221). In this example, the liquid level sensor (321) is a fibre-optic column arranged to be partially submerged in the liquid (311). An optical signal is emitted along the fibre-optic column towards the liquid surface (312) and based on the reflections of this signal from the liquid surface (312), the distance (330) is evaluated.

The liquid level sensing system (320) further comprises an actuator (322) for the liquid level sensor (321) and an aircraft angle compensation controller (not shown). In this example, the actuator (322) is arranged to alter the angle of the liquid level sensor (321) under control of the aircraft angle compensation controller, depending on an input to the aircraft angle compensation controller from a gyroscopic sensor (316).

Referring again to Fig. 2a, in this example the aircraft galley insert (200) comprises the galley insert appliance (210) and the liquid level sensing system (220). In this example, the liquid level sensor (221) evaluates the liquid level and is operably connected to the aircraft compensation controller, which is also the appliance controller for the galley insert appliance (210).

In this example, the galley insert appliance (210) is a coffee maker comprising a valve (213) which controls the flow of liquid into the brew head (214), and a brew cup (215) which contains the liquid (211), in this case coffee, once it has percolated from the brew head (214) into the brew cup (215). In this example, the aircraft compensation controller, which also controls the appliance, receives a signal from the liquid level sensor (221) when the liquid level is above a threshold value, and in response to this signal, the aircraft compensation controller sends a signal to close the valve (213) to ensure that the liquid (211) in the brew cup (215) will not overflow.

In various examples, it is clear to one skilled in the art that the liquid flow rate can be varied between a minimum and maximum flow rate and the valve (213) does not have to operate on and off. In various examples, where the appliance controller is distinct from the aircraft compensation controller, the liquid level sensor (221) is operably connected to the aircraft compensation controller, which is operably connected to the appliance controller. In other examples, where the appliance controller is distinct from the aircraft compensation controller, the liquid level sensor is operably connected directly to the appliance controller. In various embodiments, any of the liquid level sensor, aircraft compensation controller, appliance controller or some other means evaluates the liquid level based on the data from the liquid level sensor (221).

In this example, the galley insert appliance (210) comprises the gyroscopic sensor (216) which provides the input to the aircraft compensation controller. In this example, the aircraft compensation controller is further arranged to also detect the flight phase of the aircraft based on the input from the gyroscopic sensor (216). In this example, the aircraft compensation controller is arranged to close the valve (213) if the detected flight phase is the descent phase.

Referring to Fig. 4, an aircraft galley insert appliance system (400) comprises the liquid level sensing system (410), a first aircraft galley insert (420), a second aircraft galley insert (430) and a nth aircraft galley insert (440).

In this example, the first aircraft galley insert (420) comprises a first appliance controller (421) for a first galley insert appliance (422) and an aircraft angle compensation controller (411) of the liquid level sensing system (410). The second aircraft galley insert (430) comprises a second appliance controller (431) and a second galley insert appliance (432); and the nth aircraft galley insert (440) comprises an nth appliance controller (441) and an nth galley insert appliance (432).

In this example, each galley insert appliance (422, 432, 442) has its own appliance controller (421, 431, 441), however one skilled in the art will appreciate that two or more galley insert appliances (421, 431, 441) may share an appliance controller (421, 431, 441) and/or the aircraft angle compensation controller (411) may also be the appliance controller (421, 431, 441) for one or more galley insert appliance (422, 432, 442).

In this example, the liquid level sensing system (410) comprises an aircraft angle compensation controller (411), a gyroscopic sensor (423) to provide an input to the aircraft compensation controller (411); a first actuator (412) for a first liquid level sensor (413) for the first galley insert appliance (422); a second actuator (414) for a second liquid level sensor (415) for a second galley insert appliance (432); and a nth actuator (416) for a nth liquid level sensor (417) for a nth galley insert appliance (442). In this example, each galley insert appliance (422, 432, 442) has only one respective liquid level sensor (413, 415, 417) associated with it, however in various examples, a galley appliance could have multiple liquid level sensors associated with it.

In this example, the liquid level sensing system (410) is operably connected to each of the aircraft galley insert appliance controllers (421, 431, 441); however in various examples, one of the aircraft galley inserts (420, 430, 440) comprises the liquid level sensing system (410), or the liquid level sensing system (410) may be distributed between at least two of the galley inserts (420, 430, 440).

In this example, the aircraft angle compensation controller (410) receives an input from the gyroscopic sensor (423) and sends a signal to the actuators (412, 414, 416) to adjust the angle of their respective liquid level sensors (413, 415, 417).

In this example, the liquid level sensors (413, 415, 417) evaluate the liquid level and send this information to the aircraft angle compensation controller (411); which then sends a signal to the respective appliance controllers (421, 431, 441) to stop the flow of liquid in their respective galley insert appliances (422, 432, 442) if the respective liquid level in the galley insert appliance (422, 432, 442) is above a threshold value.

In various examples, the aircraft galley insert appliance system (400) also controls the flow rate of liquid in each of the galley insert appliances (422, 432, 442) depending on the detected flight phase of the aircraft.

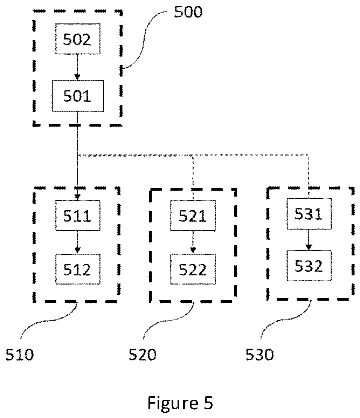

Referring to Fig. 5, a flight phase detection system (500), which is provided for reference only. The flight phase detection system (500) comprises a flight phase detection controller (501) and a gyroscopic sensor (502). The flight phase detection system is operably connected to the appliance controllers (511, 521, 531) for a first galley insert appliance (512), a second galley insert appliance (522) and a nth galley insert appliance (532). A first galley insert (510) comprises the first appliance controller (511) and the first galley insert appliance (512). A second galley insert (520) comprises the second appliance controller (521) and the second galley insert appliance (522). A nth galley insert (530) comprises the nth appliance controller (531) and the nth galley insert appliance (532).

In this example, the flight phase detection controller (501) detects the flight phase of the aircraft using the input from the gyroscopic sensor (502) and adjusts operation of the galley insert appliances (512, 522, 532) based on the detected flight phase. In this example, all the galley insert appliances (512, 522, 532) are turned off during the descent phase.

While in this example the flight phase detection system (500) comprises the gyroscopic sensor (502), in various examples the gyroscopic sensor (502) is operably connected to the flight phase detection system (500), but the flight phase detection system (500) does not comprise the gyroscopic sensor (502).

In this example, each aircraft galley insert (510, 520, 530) only comprises one galley insert appliance (512, 522, 532), however in various examples a single aircraft galley insert (510, 520, 530) could each comprise multiple appliances (512, 522, 532).

In this example, each galley insert appliance (512, 522, 532) has its own controller (511, 521, 531), however in various examples, one controller (511, 521, 531) could control at least two galley insert appliances (512, 522, 532). In various examples, the flight phase detection controller (501) could also be the appliance controller for at least one galley insert appliance (512, 522, 532).

In various examples, one galley insert (510, 520, 530) comprises the flight phase detection system (500), however in this example the flight phase detection system (500) is a standalone system. In other examples the flight phase detection system is distributed between at least two of the galley inserts (510, 520, 530). phase. In this example, all the galley insert appliances (512, 522, 532) are turned off during the descent phase.

While in this example the flight phase detection system (500) comprises the gyroscopic sensor (502), in various examples the gyroscopic sensor (502) is operably connected to the flight phase detection system (500), but the flight phase detection system (500) does not comprise the gyroscopic sensor (502).

In this example, each aircraft galley insert (510, 520, 530) only comprises one galley insert appliance (512, 522, 532), however in various examples a single aircraft galley insert (510, 520, 530) could each comprise multiple appliances (512, 522, 532).

In this example, each galley insert appliance (512, 522, 532) has its own controller (511, 521, 531), however in various examples, one controller (511, 521, 531) could control at least two galley insert appliances (512, 522, 532). In various examples, the flight phase detection controller (501) could also be the appliance controller for at least one galley insert appliance (512, 522, 532).

In various examples, one galley insert (510, 520, 530) comprises the flight phase detection system (500), however in this example the flight phase detection system (500) is a standalone system. In other examples the flight phase detection system is distributed between at least two of the galley inserts (510, 520, 530).

## Claims

1. A liquid level sensing system (220; 320; 410) for a galley insert appliance (210; 422, 432, 442) in an aircraft galley insert (200; 420, 430, 440) comprising:
a liquid level sensor (221; 321; 413, 415, 417) arranged to emit a signal towards the surface (212; 312) of a liquid (211; 311) in a galley insert appliance (210; 422, 432, 442) and to detect the reflection of the signal from the surface (212; 312) for evaluation of the liquid level; and
an aircraft angle compensation controller (411);
wherein the aircraft angle compensation controller (411) is configured to receive an input from a gyroscopic sensor (216; 316; 423) and is configured to alter the angle and/or position of the liquid level sensor (221; 321; 413, 415, 417) in response to the input from the gyroscopic sensor (216; 316; 423).

2. A liquid level sensing system (220; 320; 410) according to claim 1 further comprising at least one actuator (222; 322; 412, 414, 416) which is arranged to alter the angle and/or position of the liquid level sensor (221; 321; 413, 415, 417) under control of the aircraft angle compensation controller (411).

3. A liquid level sensing system (220; 320; 410) according to claim 2 wherein the at least one actuator (222; 322; 412, 414, 416) is configured to control the angle of the liquid level sensor (221; 321; 413, 415, 417) about a first axis (251; 253) and a second axis (252; 254).

4. A liquid level sensing system (220; 320; 410) according to any preceding claim further comprising means for evaluation of the liquid level and control of a liquid flow rate in the galley insert appliance depending on the liquid level.

5. A liquid level sensing system (220; 320; 410) according to any preceding claim wherein the aircraft angle compensation controller (411) is further arranged to control the liquid flow rate in the galley insert appliance (210; 422, 432, 442) depending on the liquid level.

6. A liquid level sensing system (220; 320; 410) according to any preceding claim wherein the aircraft angle compensation controller (411) is also an appliance controller (421, 431, 441) for the galley insert appliance (210).

7. A liquid level sensing system (220; 320; 410) according to any preceding claim further comprising the gyroscopic sensor (216; 316; 423).

8. A liquid level sensing system (220; 320; 410) according to any preceding claim wherein the aircraft angle compensation controller (411) is further arranged to evaluate the input from the gyroscopic sensor (216; 316)) to detect the flight phase of the aircraft.

9. A liquid level sensing system (220; 320; 410) according to claim 8 wherein the aircraft compensation controller (411) is further arranged to adjust operation of the galley insert appliance (210; 422, 432, 442) depending on the detected flight phase of the aircraft.

10. An aircraft galley insert appliance system (400) comprising the liquid level sensing system (220; 320; 410) of any preceding claim and at least one galley insert appliance (210; 422, 432, 442) in an aircraft galley insert (200; 420, 430, 440).

11. An aircraft galley insert appliance system (400) according to claim 10 further comprising at least one appliance controller (421, 431, 441) for the at least one galley insert appliance (210; 422, 432, 442).

12. An aircraft galley insert appliance system (400) according to claim 11 wherein the appliance controller (421, 431, 441) is configured to evaluate the liquid level and is configured to control the liquid flow rate in the galley insert appliance (210; 422, 432, 442) depending on the liquid level.

13. An aircraft galley insert appliance system (400) according to any of claims 10 to 12 wherein the aircraft galley insert appliance system (400) further comprises the gyroscopic sensor (216; 316; 423) for the liquid level sensing system (220; 320; 410).

## Patentansprüche

1. Flüssigkeitsstandmesssystem (220; 320; 410) für ein Bordkücheneinsatzgerät (210; 422, 432, 442) in einem Flugzeugbordkücheneinsatz (200; 420, 430, 440), umfassend:
einen Flüssigkeitsstandsensor (221; 321; 413, 415, 417), der so angeordnet ist, dass er ein Signal in Richtung der Oberfläche (212; 312) einer Flüssigkeit (211; 311) in einem Bordkücheneinsatzgerät aussendet (210; 422, 432, 442) und die Reflexion des Signals von der Oberfläche (212; 312) zur Bewertung des Flüssigkeitsstands erfasst; und
eine Flugzeugwinkel-Kompensationssteuerung (411);
wobei die Flugzeugwinkel-Kompensationssteuerung (411) konfiguriert ist, um eine Eingabe von einem Gyrosensor (216; 316; 423) zu empfangen, und konfiguriert ist, um den Winkel und/oder die Position des Flüssigkeitsstandsensors (221; 321; 413, 415, 417) als Reaktion auf die Eingabe von dem Gyrosensor (216; 316; 423) zu verändern.

2. Flüssigkeitsstandmesssystem (220; 320; 410) nach Anspruch 1, ferner umfassend mindestens einen Aktuator (222; 322; 412, 414, 416), der so angeordnet ist, um den Winkel und/oder die Position des Flüssigkeitsstandsensors (221; 321; 413, 415, 417) unter Steuerung der Flugzeugwinkel-Kompensationssteuerung (411) zu verändern.

3. Flüssigkeitsstandmesssystem (220; 320; 410) nach Anspruch 2, wobei der mindestens eine Aktuator (222; 322; 412, 414, 416) konfiguriert ist, um den Winkel des Flüssigkeitsstandsensors (221; 321; 413, 415, 417) um eine erste Achse (251; 253) und eine zweite Achse (252; 254) zu steuern.

4. Flüssigkeitsstandmesssystem (220; 320; 410) nach einem der vorhergehenden Ansprüche, ferner umfassend Mittel zur Auswertung des Flüssigkeitsstands und zur Steuerung einer Flüssigkeitsdurchflussrate in dem Bordkücheneinsatzgerät in Abhängigkeit des Flüssigkeitsstands.

5. Flüssigkeitsstandmesssystem (220; 320; 410) nach einem der vorhergehenden Ansprüche, wobei die Flugzeugwinkel-Kompensationssteuerung (411) ferner angeordnet ist, um die Flüssigkeitsdurchflussrate in dem Bordkücheneinsatzgerät (210; 422, 432, 442) in Abhängigkeit des Flüssigkeitsstands zu steuern.

6. Flüssigkeitsstandmesssystem (220; 320; 410) nach einem der vorhergehenden Ansprüche, wobei die Flugzeugwinkel-Kompensationssteuerung (411) auch eine Gerätesteuerung (421, 431, 441) für das Bordkücheneinsatzgerät (210) ist.

7. Flüssigkeitsstandmesssystem (220; 320; 410) nach einem der vorhergehenden Ansprüche, ferner umfassend den Gyrosensor (216; 316; 423) .

8. Flüssigkeitsstandmesssystem (220; 320; 410) nach einem der vorhergehenden Ansprüche, wobei die Flugzeugwinkel-Kompensationssteuerung (411) ferner angeordnet ist, um die Eingabe von dem Gyrosensor (216; 316) zu bewerten, um die Flugphase des Flugzeugs zu erfassen.

9. Flüssigkeitsstandmesssystem (220; 320; 410) nach Anspruch 8, wobei die Flugzeug-Kompensationssteuerung (411) ferner angeordnet ist, um den Betrieb des Bordkücheneinsatzgeräts (210; 422, 432, 442) in Abhängigkeit der erfassten Flugphase des Flugzeugs anzupassen.

10. Flugzeugbordkücheneinsatzgerätesystem (400), umfassend das Flüssigkeitsstandmesssystem (220; 320; 410) nach einem der vorhergehenden Ansprüche und mindestens ein Bordkücheneinsatzgerät (210; 422, 432, 442) in einem Flugzeugbordkücheneinsatz (200; 420, 430, 440).

11. Flugzeugbordkücheneinsatzgerätesystem (400) nach Anspruch 10, ferner umfassend mindestens eine Gerätesteuerung (421, 431, 441) für das mindestens eine Bordkücheneinsatzgerät (210; 422, 432, 442).

12. Flugzeugbordkücheneinsatzgerätesystem (400) nach Anspruch 11, wobei die Gerätesteuerung (421, 431, 441) konfiguriert ist, um den Flüssigkeitsstand zu bewerten, und konfiguriert ist, um die Flüssigkeitsdurchflussrate in dem Bordkücheneinsatzgerät (210; 422, 432, 442) in Abhängigkeit des Flüssigkeitsstands zu steuern.

13. Flugzeugbordkücheneinsatzgerätesystem (400) nach einem der Ansprüche 10 bis 12, wobei das Flugzeugbordkücheneinsatzgerätesystem (400) ferner den Gyrosensor (216; 316; 423) für das Flüssigkeitsstandmesssystem (220; 320; 410) umfasst.

## Revendications

1. Système de détection de niveau de liquide (220 ; 320 ; 410) pour un appareil d'insert de cuisine (210 ; 422, 432, 442) dans un insert de cuisine d'aéronef (200 ; 420, 430, 440), comprenant :
un capteur de niveau de liquide (221 ; 321 ; 413, 415, 417) agencé pour émettre un signal vers la surface (212 ; 312) d'un liquide (211 ; 311) dans un appareil d'insert de cuisine (210 ; 422, 432, 442) et pour détecter la réflexion du signal depuis la surface (212 ; 312) pour évaluer le niveau de liquide ; et un contrôleur de compensation d'angle d'aéronef (411) ;
dans lequel le contrôleur de compensation d'angle d'aéronef (411) est configuré pour recevoir une entrée provenant d'un capteur gyroscopique (216 ; 316 ; 423) et est configuré pour modifier l'angle et/ou la position du capteur de niveau de liquide (221 ; 321 ; 413, 415, 417) en réponse à l'entrée provenant du capteur gyroscopique (216 ; 316 ; 423).

2. Système de détection de niveau de liquide (220 ; 320 ; 410) selon la revendication 1, comprenant également au moins un actionneur (222 ; 322 ; 412, 414, 416) agencé pour modifier l'angle et/ou la position du capteur de niveau de liquide (221 ; 321 ; 413, 415, 417) sous le contrôle du contrôleur de compensation d'angle d'aéronef (411).

3. Système de détection de niveau de liquide (220 ; 320 ; 410) selon la revendication 2, dans lequel le au moins un actionneur (222 ; 322 ; 412, 414, 416) sont configurés pour contrôler l'angle du capteur de niveau de liquide (221 ; 321 ; 413, 415, 417) autour d'un premier axe (251 ; 253) et d'un second axe (252 ; 254).

4. Système de détection de niveau de liquide (220 ; 320 ; 410) selon une quelconque revendication précédente, comprenant également des moyens d'évaluation du niveau de liquide et de contrôle d'un débit de liquide dans l'appareil d'insert de cuisine en fonction du niveau de liquide.

5. Système de détection de niveau de liquide (220 ; 320 ; 410) selon une quelconque revendication précédente, dans lequel le contrôleur de compensation d'angle d'aéronef (411) est en outre agencé pour contrôler le débit de liquide dans l'appareil d'insert de cuisine (210 ; 422, 432, 442) en fonction du niveau de liquide.

6. Système de détection de niveau de liquide (220 ; 320 ; 410) selon une quelconque revendication précédente, dans lequel le contrôleur de compensation d'angle d'aéronef (411) est également un contrôleur d'appareil (421, 431, 441) pour l'appareil d'insert de cuisine (210).

7. Système de détection de niveau de liquide (220 ; 320 ; 410) selon une quelconque revendication précédente, comprenant également le capteur gyroscopique (216 ; 316 ; 423).

8. Système de détection de niveau de liquide (220 ; 320 ; 410) selon une quelconque revendication précédente, dans lequel le contrôleur de compensation d'angle d'aéronef (411) est en outre agencé pour évaluer l'entrée provenant du capteur gyroscopique (216 ; 316) afin de détecter la phase de vol de l'aéronef.

9. Système de détection de niveau de liquide (220 ; 320 ; 410) selon la revendication 8, dans lequel le contrôleur de compensation d'angle d'aéronef (411) est en outre agencé pour ajuster le fonctionnement de l'appareil d'insert de cuisine (210 ; 422, 432, 442) en fonction de la phase de vol détectée de l'aéronef.

10. Système d'appareil d'insert de cuisine d'aéronef (400) comprenant le système de détection de niveau de liquide (220 ; 320 ; 410) selon une quelconque revendication précédente et au moins un appareil d'insert de cuisine (210 ; 422, 432, 442) dans un insert de cuisine d'aéronef (200 ; 420, 430, 440).

11. Système d'appareil d'insert de cuisine d'aéronef (400) selon la revendication 10, comprenant également au moins un contrôleur d'appareil (421, 431, 441) pour le au moins un appareil d'insert de cuisine (210 ; 422, 432, 442).

12. Système d'appareil d'insert de cuisine d'aéronef (400) selon la revendication 11, dans lequel le contrôleur d'appareil (421, 431, 441) est configuré pour évaluer le niveau de liquide et est configuré pour contrôler le débit de liquide dans l'appareil d'insert de cuisine (210 ; 422, 432, 442) en fonction du niveau de liquide.

13. Système d'appareil d'insert de cuisine d'aéronef (400) selon l'une quelconque des revendications 10 à 12, dans lequel le système d'appareil d'insert de cuisine d'aéronef (400) comprend également le capteur gyroscopique (216 ; 316 ; 423) pour le système de détection de niveau de liquide (220 ; 320 ; 410).
